# EUROPEAN PATENT APPLICATION

(11) **EP 3 716 387 A1**
(43) Date of publication of application: **30.09.2020**
(21) Application number: 20166477.8
(22) Date of filing: 27.03.2020
(51) Int. Cl.: H01M 10/04, H01M 10/0525, H01M 10/0587

(54) **BATTERY CELL AND BATTERY USING THE SAME**

(30) Priority: 28.03.2019 CN 201920411887 U
(71) Applicant: Ningde Amperex Technology Ltd., Ningde City, Fujian (CN)
(72) Inventor: LIU, BIAO, Ningde City, Fujian (CN)
(74) Representative: CMS Cameron McKenna Nabarro Olswang LLP

(57) **Abstract**

A battery cell includes a wound structure formed by winding a first electrode plate and a spaced second electrode plate. A separator is formed between the first electrode plate and the second electrode plate. The first electrode plate includes a first U-shaped portion, and the second electrode plate includes a second U-shaped portion. The first U-shaped portion includes a first straight segment and a folded-back segment extending from the first straight segment. The second U-shaped portion faces the first U-shaped portion and forms a mating structure. The second U-shaped portion includes a first bent area. A surface of the second U-shaped portion facing a center of the battery cell is close to a bent area of the second U-shaped portion. The folded-back segment has the same bending direction as the second U-shaped portion. The disclosure also provides a battery using the battery cell.

## Description

### FIELD

The disclosure generally relates to batteries, in particular, to a battery cell and a battery using the battery cell.

### BACKGROUND

Lithium-ion battery is a safe and environmentally friendly battery. The lithium-ion battery is widely used in portable devices, such as mobile phones, video cameras, and notebook computers. The portable devices are made smarter and are multifunctional, that needs the battery to have higher energy density and higher discharge rate.

In the field of battery technology, when the battery has a high energy density and fast charge and discharge rates, a proportion of active materials in the battery will be greater, and during a charge / discharge process of the battery, heat is dissipated faster and the battery will has a low temperature rise.

The battery mostly adopts a wound structure, that the battery has only one tab disposed in each electrode plate. At the same time, a positive or a negative electrode of the battery has a large amount of uncoated active material, thereby limiting an increase in battery energy density and causing high temperatures during charging and discharging. For example, an unused active material layer exists in innermost and outermost cores of a roll core, which not only wastes active materials, but also limits an optimal energy density of the battery.

### SUMMARY

The present disclosure aims to solve at least one of the technical problems existing in the prior art. For this reason, the disclosure discloses a battery cell. The battery cell has a high energy density, a good heat dissipation effect during charging and discharging, and working temperature is managed and restricted.

A battery cell includes a wound structure formed by winding a first electrode plate and a second electrode plate. The first electrode plate and the second electrode plate are spaced apart. A separator is formed between the first electrode plate and the second electrode plate. At a start end of the wound structure, the first electrode plate includes a first U-shaped portion. The first U-shaped portion includes a first straight segment and a folded-back segment extending from the first straight segment. At the start end of the wound structure, the second electrode plate includes a second U-shaped portion. The second U-shaped portion faces the first U-shaped portion, so as to form a mating structure. The second U-shaped portion includes a first bent area. A surface of the second U-shaped portion facing a center of the battery cell is close to the folded-back segment. The folded-back segment has the same bending direction as the first bent area.

The mating structure formed on the start end of the wound structure improves an energy density of the battery and improves heat dissipation of the battery cell during charging and discharging. The folded-back segment formed on one end of the first U-shaped portion prevents lithium from escaping at the bent area of the second U-shaped portion, improves the reliability and safety of the battery cell, and extends the service life of the battery cell.

In at least one embodiment, a first active material layer is formed on a surface of the folded-back segment.

In at least one embodiment, the first active material layer is formed on a surface of the folded-back segment opposite to the second U-shaped portion.

In at least one embodiment, the first U-shaped portion further includes a third straight segment extending from an end of the folded-back segment, and the third straight segment is substantially parallel to the first straight segment.

In at least one embodiment, a total length of the folded-back segment and the third straight segment is greater than or equal to 4 mm and less than or equal to 10 mm.

In at least one embodiment, at a trailing end of the wound structure, the first electrode plate is provided with a first single-sided area. The first single-sided area includes a first surface and a second surface opposite to the first surface. The first surface is opposite to the center of battery cell. The first active material layer is formed on the first surface, but not formed on the second surface.

In at least one embodiment, at the trailing end of the wound structure, the first electrode plate further includes a first empty foil area extending from the first single-sided area.

In at least one embodiment, at the trailing end of the wound structure, the second electrode plate is provided with a second single-sided area. The second single-sided area includes a third surface and a fourth surface opposite to the third surface. The third surface is opposite to the center of battery cell. A second active material layer is formed on the third surface, but not formed on the fourth surface.

In at least one embodiment, at the trailing end of the wound structure, the second electrode plate further includes a second empty foil area extending from the second single-sided area.

The present disclosure also discloses a battery including the battery cell.

### BRIEF DESCRIPTION OF THE DRAWINGS

Implementations of the present disclosure will now be described, by way of embodiments, with reference to the attached figures.
FIG. 1 is a perspective view of a first embodiment of a battery cell according to the present disclosure. FIG. 1 shows a wound structure formed by winding a first electrode plate and a second electrode plate.
FIG. 2 is a perspective view of the first electrode plate of FIG. 1 before bending.
FIG. 3 is a perspective view of the second electrode plate of FIG. 1 before bending.
FIG. 4 is a perspective view of a second embodiment of a battery cell according to the present disclosure. FIG.4 shows a wound structure formed by winding a first electrode plate and a second electrode plate.
FIG. 5 is a perspective view of the first electrode plate of FIG. 4 before bending.
FIG. 6 is a perspective view of the second electrode plate of FIG. 4 before bending.
FIG. 7 is a perspective view of a third embodiment of a battery cell according to the present disclosure. FIG.7 shows a wound structure formed by winding a first electrode plate and a second electrode plate.
FIG. 8 is a perspective view of the first electrode plate of FIG. 7 before bending.
FIG.9 is a perspective view of the second electrode plate of FIG. 7 before bending.
FIG. 10 is a perspective view of a fourth embodiment of a battery cell according to the present disclosure, showing a wound structure formed by winding a first electrode plate and a second electrode plate.
FIG. 11 is a perspective view of the first electrode plate of FIG. 10 before bending.
FIG. 12 is a perspective view of the second electrode plate of FIG. 10 before bending.
FIG. 13 is a perspective view of a mating structure according to the present disclosure.

### DETAILED DESCRIPTION

Implementations of the disclosure will now be described, by way of embodiments only, with reference to the drawings. The disclosure is illustrative only, and changes may be made in the detail within the principles of the present disclosure. It will, therefore, be appreciated that the embodiments may be modified within the scope of the claims.

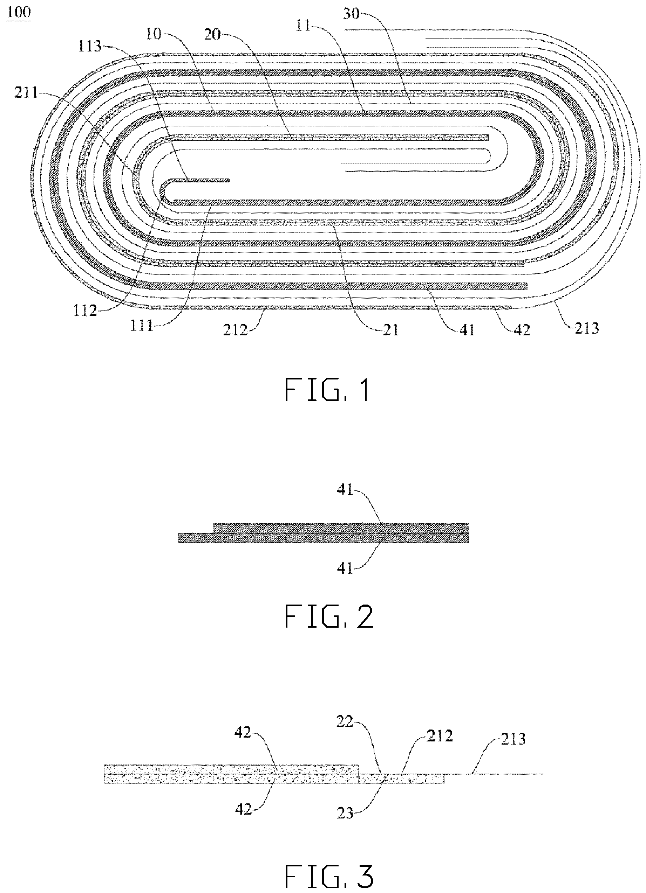

FIGS. 1-13 illustrate a battery cell 100 in one embodiment.

The battery cell 100 in an embodiment includes a wound structure formed by winding a first electrode plate 10 and a second electrode plate 20. The first electrode plate 10 and the second electrode plate 20 are spaced apart. A separator 30 is provided between the first electrode plate 10 and the second electrode plate 20.

FIG. 1 illustrates that the first electrode plate 10 includes a first U-shaped portion 11. The first U-shaped portion 11 is formed on a start end of the wound structure. The first U-shaped portion 11 includes a first straight segment 111 and a folded-back segment 112 extending from the first straight segment 111, a third straight segment 113 extending from the folded-back segment 112, a second bent area 117 extending from the first straight segment 111, and a fourth straight segment 116 extending from the second bent area 117. The second bent area 117 faces the folded-back segment 112. The fourth straight segment 116 is substantially parallel to the first straight segment 111. The third straight segment 113 is substantially parallel to the first straight segment 111 and is located between the first straight segment 111 and the fourth straight segment 116. The folded-back segment 112 has an opposite bending direction with the second bent area 117.

The second electrode plate 20 includes a second U-shaped portion 21. The second U-shaped portion 21 is formed on the start end of the wound structure. The second U-shaped portion 21 faces the first U-shaped portion 11, so as to form a mating structure. The second U-shaped portion 21 includes a first bent area 211, a fifth straight segment 214, and a sixth straight segment 215. The fifth straight segment 214 and the sixth straight segment 215 extend from two opposite ends of the first bent area 211. The folded-back segment 112 has the same bending direction as the first bent area 211 of the second U-shaped portion 21..

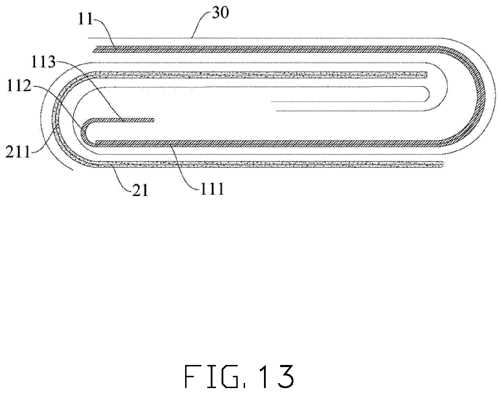

Referring to FIG. 13, the first U-shaped portion 11 and the second U-shaped portion 21 are fitted so as to mate together (a mating structure), that is, at the start end of the wound structure, the first electrode plate 10 and the second electrode plate 20 are both wound through 180 degrees and are placed facing each other. The third straight segment 113 and the first straight segment 111 are positioned between the fifth straight segment 214 and the sixth straight segment 215. The first bent area 211 faces the folded-back segment 112. The fifth straight segment 214 is positioned between the fourth straight segment 116 and the third straight segment 113.

It should be noted that the mating structure utilizes the active materials coated on the first U-shaped portion 11 and the second U-shaped portion 21, thereby increasing the energy density of the battery cell 100. Further the heat dissipation ability of the battery cell 100 is improved during the charging or discharging, and large rises in temperature of the battery cell 100 are prevented.

Further, the folded-back segment 112 is formed at an end of the first straight segment 111 not connected to the transition segment. During charging and discharging of the battery cell 100, the folded-back segment 112 prevents lithium from escaping at the first bent area 211 of the second U-shaped portion 21, improve the reliability and safety of the battery cell 100, and extend the service life of the battery cell 100.

The energy density of the battery cell 100 and the heat dissipation ability of the battery cell 100 during charging and discharging are improved by the mating structure at the start end of the wound structure. The folded-back segment 112 is provided at one end of the first electrode plate 10 to prevent lithium from escaping at the first bent area 211 of the second U-shaped portion 21, improve the reliability and safety of the battery cell 100, and extend the service life of the battery cell 100.

In at least one embodiment, a first active material layer 41 is formed on a surface of the folded-back segment 112, so that lithium is prevented from escaping at the second U-shaped portion 21.

As shown in FIG. 1, in a further embodiment of the present disclosure, the first active material layer 41 is disposed on a surface of the folded-back segment 112 opposite the second U-shaped section 21. As a result, an area containing only a single layer of the first active material layer 41 is formed on the folded-back segment 112, and the area is opposite to the transition segment of the second U-shaped portion 21 (the bent area 112), wherein a surface of the second U-shaped portion 21 facing a center of the battery cell 100 faces the folded-back segment 112, and the folded-back segment 112 has the same bending direction as the first bent area 211. Therefore, lithium is prevented from escaping at the second U-shaped portion 21 during charging and discharging of the battery cell 100.

As shown in FIG. 1, in some embodiments of the present disclosure, the first U-shaped portion 11 may further include a third straight segment 113 extending from the folded-back segment 112 and is substantially parallel to the first straight segment 111.

Specifically, setting the third straight segment 113 increases a fitting length of the transition segment of the second U-shaped portion 21 and the first U-shaped portion 11. Moreover, the first active material layer 41 is also coated on a surface of the third straight segment 113 opposite to the second U-shaped portion 21. The third straight segment 113 and the folded-back segment 112 are correspondingly arranged at the transition section of the second U-shaped portion 21, thereby reducing the risk of lithium escaping in the second U-shaped portion 21.

In a further embodiment of the present disclosure, a total length of the folded-back segment 112 and the third straight segment 113 is greater than or equal to 4 mm and less than or equal to 10 mm.

It can be understood that, when the first electrode plate 10 is an anode electrode plate and the second electrode plate 20 is a cathode electrode plate, a total length of the folded-back segment 112 and the third straight segment 113 satisfies the aforementioned parameters (greater than or equal to 4 mm and less than or equal to 10 mm), the folded-back segment 112 and the third straight segment 113 can be coated with only one first active material layer 41 to meet the requirement that the anode active material layer exceeds the cathode active material layer at the start end of the wound structure, thereby preventing the first electrode plate 10 from contacting the second electrode plate 20 to cause a short circuit, and ensuring the reliability and safety of the battery cell 100.

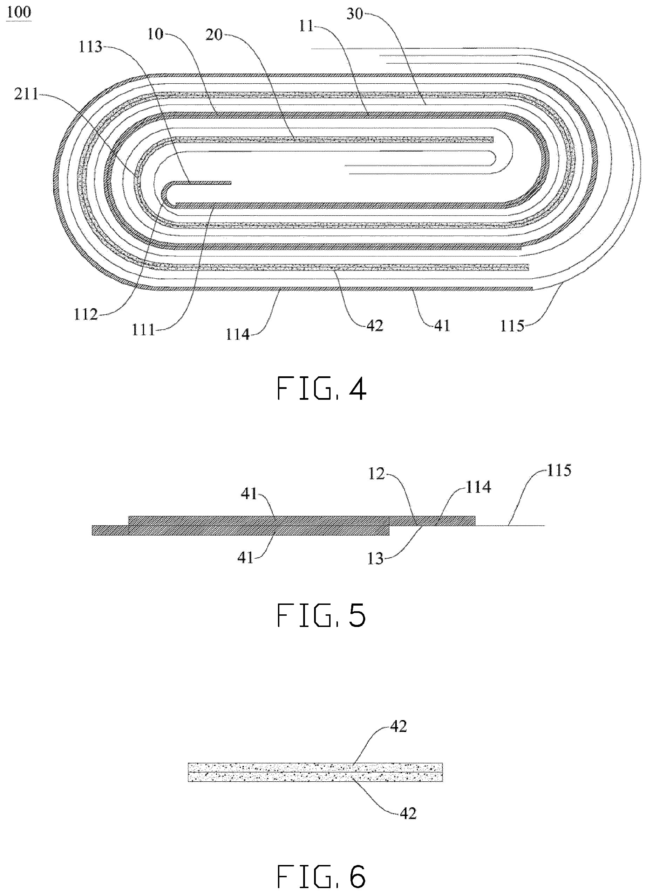

As shown in FIG. 4 and FIG. 5, in some embodiments of the present disclosure, at a trailing end of the wound structure, the first electrode plate 10 is provided with a first single-sided area 114. The first single-sided area 114 includes a first surface 12 and a second surface 13 opposite to the first surface 12. The first surface 12 is opposite to the center of battery cell 100. The first active material layer 41 is formed on the first surface 12, but not formed on the second surface 13. It is configured such that the first active material layer 41 is provided only on the first surface 12.

As shown in FIG. 4, in a further embodiment of the present disclosure, at the trailing end of the wound structure, the first electrode plate 10 further includes a first empty foil area 115 extending from the first single-sided area 114. That is, the wound structure ends with the first empty foil area 115.

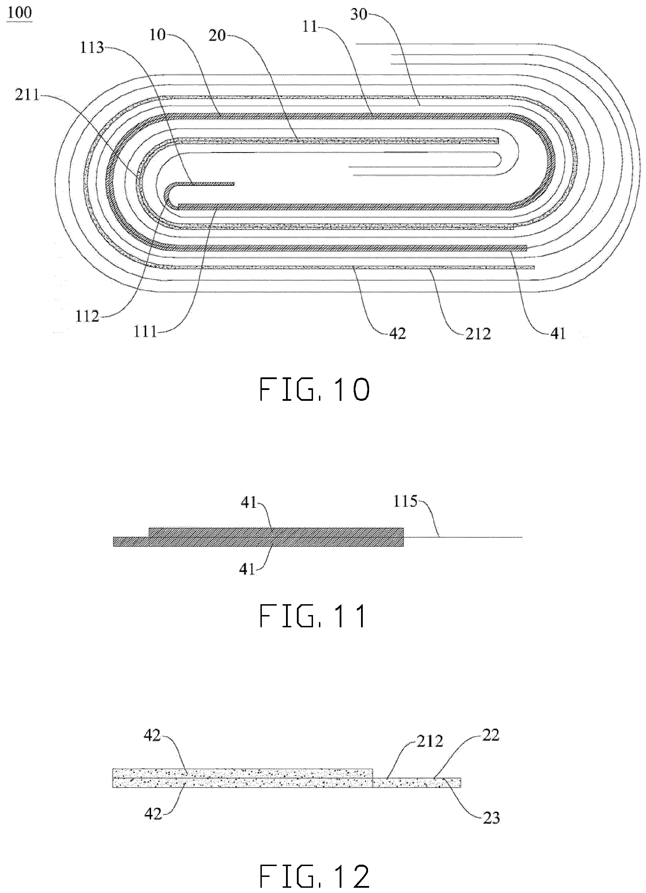

As shown in FIG. 10, in some embodiments of the present disclosure, at the trailing end of the wound structure, the second electrode plate 20 is provided with a second single-sided area 212.

Specifically, as shown in FIG. 10 and FIG. 12, the second single-sided area 212 includes a third surface 22 and a fourth surface 23 opposite the third surface 22. The third surface 22 is opposite to the center of battery cell 100. A second active material layer 42 is formed on the third surface 22, but not formed on the fourth surface 23. It is configured such that the second active material layer 42 is provided only on the third surface 22.

In a further embodiment of the present disclosure, at the trailing end of the wound structure, the second electrode plate 20 further includes a second empty foil area 213 extending from the second single-sided area 212, thereby the structure will end with the second empty foil area 213.

It can be understood that the first empty foil area 115 refers to an area where the two opposite surfaces of the first electrode plate 10 are not provided with the first active material layer 41, and the second empty foil area 213 refers to an area where the two opposite surfaces of the second electrode plate 20 are not provided with the second active material layer 42. The first surface 12 and the second surface 13 merely describe the first single-sided area 114 corresponding to them, and the third surface 22 and the fourth surface 23 merely describe the second single-sided area 212 corresponding thereto.

It should be noted that, at the trailing end of the wound structure, the manner in which the first electrode plate 10 is coated with the first active material layer 41 and the manner in which the second electrode plate 20 is coated with the second active material layer 42 are various. The manners of coating can be adjusted according to different equipment requirements.

FIG. 1 shows a battery cell 100 in a first embodiment. FIG. 2 and FIG. 3 respectively show a first electrode plate 10 and a second electrode plate 20 of the battery cell 100 of FIG. 1. As shown in FIG. 2, a first active material layer 41 is provided on two opposite surfaces of the trailing end of the first electrode plate 10, and the first active material layer 41 is flush with a trailing end of the first electrode plate 10. As shown in FIG. 3, at the trailing end of the battery cell 100, the third surface 22 is provided with the second active material layer 42, and the fourth surface 23 is not provided with the second active material layers 42, and the second empty foil area 213 extends from the second single-sided area 212.

FIG. 4 shows a battery cell 100 in a second embodiment. FIGS. 5 and 6 respectively illustrate the first electrode plate 10 and the second electrode plate 20 of the battery cell 100 shown in FIG. 4. As shown in FIG. 5, at the trailing end of the battery cell 100, the first surface 12 is provided with a first active material layer 41, and the second surface 13 is not provided with the first active material layer 41. The first empty foil area 115 extends from the first single-sided area 114. As shown in FIG. 6, the second active material layer 42 is provided on two opposite surfaces of the second electrode plate 20, and the second active material layer 42 is flush with the trailing end of the second electrode plate 20.

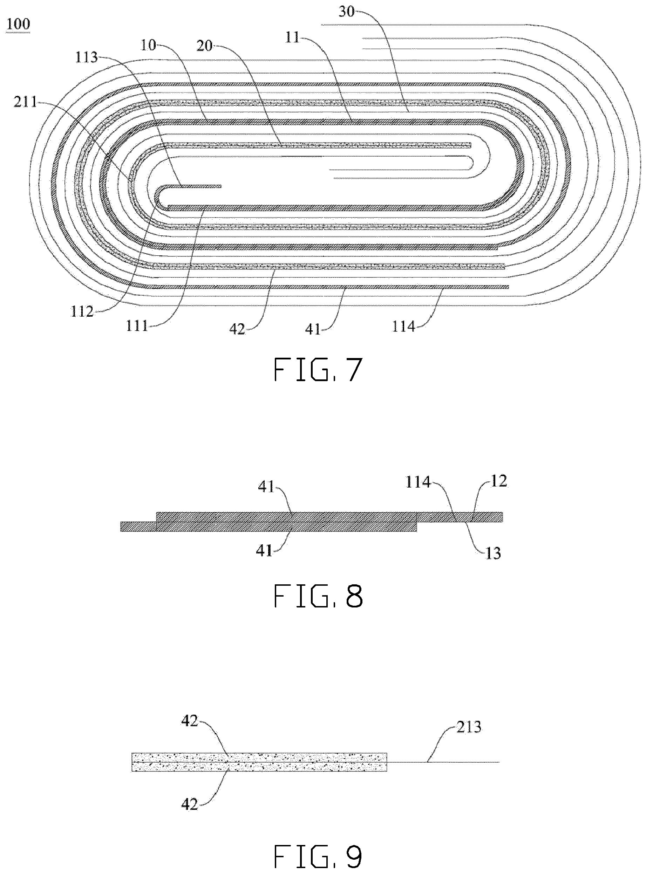

FIG. 7 illustrates shows a battery cell 100 in a third embodiment. FIGS. 8 and 9 respectively illustrate the first electrode plate 10 and the second electrode plate 20 of the battery cell 100 shown in FIG. 7. As shown in FIG. 8, the first surface 12 is provided with the first active material layer 41 and the second surface 13 is not provided with the first active material layer 41. As shown in FIG. 9, at a trailing end of the battery cell 100, two opposite surfaces of the second electrode plate 20 is provided with a second active material layer 42, the active material layers 42 formed on two opposite surfaces of the second electrode plate 20 are flush with each other. The second empty foil area 213 extends from an end of the second active material layers 42.

FIG. 10 illustrates a battery cell 100 in a third embodiment. FIGS. 11 and 12 respectively illustrate the first electrode plate 10 and the second electrode plate 20 of the battery cell 100 shown in FIG. 10. As shown in FIG. 11, at a trailing end of the battery cell 100, two opposite surfaces of the first electrode plate 10 is provided with a first active material layer 41, the first active material layers 41 formed on the two opposite surfaces of the first electrode plate 10 are flush with each other, and a first empty foil region 115 extends from an end of the first active material layers 41. As shown in FIG. 12, a trailing end of the second electrode plate 20 has the third surface 22 provided with the second active material layer 42, and the fourth surface 23 is not provided with the second active material layer 42.

It should be noted that the coating and winding techniques of the first electrode plate 10 and the second electrode plate 20 at the trailing end of the battery cell 100 are not limited to those described, and can be adjusted according to the requirements of the equipment corresponding to the battery cell 100.

The present disclosure also relates to a battery, the battery includes the battery cell 100. By providing the battery cell 100, the energy density of the battery is improved, and the battery has a good heat dissipation during charging and discharging, and temperature rises are contained so as to be small scale, which improves the reliability and safety of the battery.

The disclosure is illustrative only, and changes may be made in the detail, including in matters of shape, size, and arrangement of the parts within the principles of the present disclosure, up to and including the full extent established by the broad general meaning of the terms used in the claims. It will, therefore, be appreciated that the embodiments described above may be modified within the scope of the claims.

## Claims

1. A battery cell (100), comprising:
a wound structure formed by winding a first electrode plate (10) and a second electrode plate (20) spaced apart; **characterized in that**:
at a winding start end of the wound structure, the first electrode plate (10) comprises a first U-shaped portion (11), and the first U-shaped portion (11) comprises a first straight segment (111) and a folded-back segment (112) extending from the first straight segment (111);
at the winding start end of the wound structure, the second electrode plate (20) comprises a second U-shaped portion (21), and the second U-shaped portion (21) faces the first U-shaped portion (11), so as to form a mating structure; and
the second U-shaped portion (21) comprises a first bent area (211), a surface of the second U-shaped portion (21) facing a center of the battery cell (100) is close to the folded-back segment (112), and the folded-back segment (112) has the same bending direction as the first bent area (211); and
a separator (30) formed between the first electrode plate (10) and the second electrode plate (20);

2. The battery cell (100) of claim 1, **characterized in that**, a first active material layer (41) is disposed on a surface of the folded-back segment (112).

3. The battery cell (100) of claim 2, **characterized in that**, the first active material layer (41) is disposed on the surface of the folded-back segment (112) facing the second U-shaped portion (21).

4. The battery cell (100) of claim 1, **characterized in that**, the first U-shaped portion (11) further includes a third straight segment (113) extending from one end of the folded-back segment (112), and the third straight segment (113) is parallel to the first straight segment (111).

5. The battery cell (100) of claim 4, **characterized in that**, the first U-shaped portion (11) further includes second bent area (117) extending from the first straight segment (111), and a fourth straight segment (116) extending from the second bent area (117); the second bent area (117) faces the folded-back segment (112); the fourth straight segment (116) is substantially parallel to the first straight segment (111); and the third straight segment (113) is located between the first straight segment (111) and the fourth straight segment (116).

6. The battery cell (100) of claim 5, **characterized in that**, the folded-back segment (112) has an opposite bending direction with the second bent area (117).

7. The battery cell (100) of claim 5, **characterized in that**, the second U-shaped portion 21 further comprises a fifth straight segment (214) and a sixth straight segment (215); the fifth straight segment (214) and the sixth straight segment (215) extend from two opposite ends of the first bent area (211); and the fifth straight segment (214) and the sixth straight segment (215) are parallel to each other.

8. The battery cell (100) of claim 7, **characterized in that**, the third straight segment (113) and the first straight segment (111) are positioned between the fifth straight segment (214) and the sixth straight segment (215); the first bent area (211) faces the folded-back segment (112); and the fifth straight segment (214) is positioned between the fourth straight segment (116) and the third straight segment (113).

9. The battery cell (100) of claim 4, **characterized in that**, a total length of the folded-back segment (112) and the third straight segment (113) is greater than or equal to 4 mm and less than or equal to 10 mm or less.

10. The battery cell (100) of claim 2, **characterized in that**, at a trailing end of the wound structure, the first electrode plate (10) is provided with a first single-sided area (114); the first single-sided area (114) comprises a first surface (12) and a second surface (13) opposite to the first surface (12); the first surface (12) is opposite to the center of battery cell (100); and the first active material layer (41) is formed on the first surface (12), but not formed on the second surface (13).

11. The battery cell (100) of claim 10, **characterized in that**, at the trailing end of the wound structure, the first electrode plate (10) further comprises a first empty foil area (115) extending from the first single-sided area (114).

12. The battery cell (100) of claim 2, **characterized in that**, at the trailing end of the wound structure, the first electrode plate (10) further comprises a first empty foil area (115) extending from an end of the first active material layers (41).

13. The battery cell (100) of claim 1, **characterized in that**, at the trailing end of the wound structure, the second electrode plate (20) is provided with a second single-sided area (212); the second single-sided area (212) comprises a third surface (22) and a fourth surface (23) opposite to the third surface (22); the third surface (22) is opposite to the center of battery cell (100); and a second active material layer (42) is formed on the third surface (22), but not formed on the fourth surface (23).

14. The battery cell (100) of claim 13, **characterized in that**, at the trailing end of the wound structure, the second electrode plate (20) further comprises a second empty foil area (213) extending from the second single-sided area (212).

15. A battery, **characterized in that**, the battery comprises a battery cell (100) of any one of claims 1 to 14.
